Europäisches Patentamt

(19) European Patent Office

Office européen des brevets

(11) Numéro de publication: **0 104 121**
**B1**

(12) FASCICULE DE BREVET EUROPEEN

(45) Date de publication du fascicule du brevet:
21.08.85

(21) Numéro de dépôt: 83401831.9

(22) Date de dépôt: 20.09.83

(51) Int. Cl.⁴: **A 23 L 1/221,** A 23 L 1/222,
A 23 F 5/48, A 23 F 5/50,
C 11 B 9/02

(54) Procédé et installation pour l'extraction d'arômes naturels de produits végétaux et produits ainsi obtenus.

(30) Priorité: 20.09.82 FR 8215775

(43) Date de publication de la demande:
28.03.84 Bulletin 84/13

(45) Mention de la délivrance du brevet:
21.08.85 Bulletin 85/34

(84) Etats contractants désignés:
CH DE FR GB IT LI

(56) Documents cités:
FR - A - 2 192 852
FR - A - 2 290 156
FR - A - 2 343 433
FR - A - 2 453 893
FR - A - 2 483 454

JOURNAL OF FOOD SCIENCE, vol. 43, 1978, pages
1680-1682

(73) Titulaire: **COMPAGNIE FRANCAISE DE RAFFINAGE**
**Société anonyme dite:, 5, rue Michel-Ange,**
**F-75781 Paris Cedex 16 (FR)**

(72) Inventeur: **Loutaty, Roben, 29, rue Sery, F-76600 Le**
**Havre (FR)**
Inventeur: **Rolland, Christian, 17, rue Bossière,**
**F-76600 Le Havre (FR)**

(74) Mandataire: **Jolly, Jean-Pierre et al, Cabinet BROT et**
**JOLLY 83, rue d'Amsterdam, F-75008 Paris (FR)**

**Description**

La présente invention concerne un procédé pour l'extraction d'arômes naturels à partir de produits végétaux, tels que fruits, légumes, graines ou plantes aromatiques.

Les arômes naturels contiennent généralement une grande variété de matières très volatiles et très fragiles qu'il est difficile d'isoler de façon économique, sans nuire à la qualité de l'arôme obtenu. Il est donc tout à fait exclu d'extraire l'arôme en distillant la pâte obtenue après broyage des fruits, car à la température de distillation, les arômes recherchés seraient certainement volatilisés, dégradés ou transformés, au moins partiellement.

Pour éviter cet inconvénient, plusieurs méthodes ont été proposées qui utilisent l'addition au broyat de solvants à bas point d'ébullition, tels que l'éther, le fréon, le gaz carbonique à l'état surcritique, le pentane, etc., puis la séparation de la phase liquide en faisant passer le broyat dans un filtre-presse. Mais en raison de la présence de pectine dans le broyat, ladite phase liquide se présente sous forme d'une émulsion très stable des solvants chargés d'arômes dans un liquide constitué en grande partie d'eau. La séparation des solvants de l'eau peut certes être effectuée en laissant décanter le liquide. Cependant, une telle méthode n'est pas exploitable à l'échelle industrielle étant donné qu'elle est trop longue à mettre en ouevre et nécessiterait en outre l'utilisation de grandes cuves de décantation. On pourra à cet effet se reporter à l'article de Crandall et al. dans »Journal of Food Science«, Volume 43 (1978), pages 1680 à 1682.

Une autre méthode connue consiste à ajouter un désémulsifiant à la phase liquide, mais on évite d'utiliser ce produit parce qu'il est cher et parce qu'il risque d'altérer la saveur et la pureté des arômes.

On pourrait encore extraire le solvant par centrifugation, mais ce procédé est trop coûteux et se traduirait nécessairement par une augmentation du prix de revient de l'arôme.

La présente invention propose un procédé d'extraction d'arômes naturels d'origine végétale, à partir notamment de fruits, de légumes, de graines ou de plantes aromatiques, qui permette d'obtenir, de façon économique, des arômes dont les propriétés organoleptiques soient conservées.

Le procédé selon l'invention consiste à réduire les produits vegétaux en une fine bouille contenant l'arôme et les pectines:

— à ajouter à ladite bouillie un solvant qui forme à chaud, avec l'eau des produits végétaux, un mélange azéotropique hétérogène ayant un point d'ébullition inférieur à la température limite de stabilité des principales essences constitutives de l'arôme;
— à chauffer la bouillie dans un réacteur à la température d'ébullition du mélange azéotropique;
— à condenser les vapeurs dans un récipient séparé;
— à décanter le condensat obtenu de manière à séparer l'eau et le solvant;
— à recycler ledit solvant dans le réacteur;
— à arrêter la distillation au moment où la température dans le réacteur monte brusquement et devient nettement supérieure à la température d'ébullition du mélange azéotropique;
— à filtrer l'extrait, afin de séparer la matière solide du solvant contenant l'arôme; et
— à isoler l'arôme du solvant par tout procédé approprié.

Ainsi, l'idée de base de l'invention est déliminer l'eau de la phase liquide afin de casser les émulsions dues en particulier à la présence de pectines et de l'eau. A cet effet, le solvant utilisé doit former un mélange azéotropique hétérogène avec l'eau, de manière que celle-ci puisse être éliminée lors de la phase de décantation dans le récipient séparé.

Ensuite, la séparation de l'arôme et du solvant peut être effectuée par distillation de l'extrait obtenu à la sortie du réacteur, ou en ayant recours à une technique d'entraînement à l'aide d'un gaz inerte, appelée strippage, ou encore par la combinaison d'une distillation et d'un strippage.

Il est évident que des précautions sont à prendre aussi bien pour la distillation de l'extrait que pour le transfert de l'arôme de la bouillie dans le solvant, car dans les deux cas, il faut éviter que les arômes soient portés à une température et une pression telles qu'ils se volatilisent ou se dégradent. C'est ainsi que:

— lorsque l'arôme est particulièrement instable, thermosensible ou volatil, la pression requise aussi bien pour l'extraction de la bouille que pour la distillation de l'extrait ne doit pas être trop faible, c'est-à-dire inférieure à 0,2 bar, car à une telle pression, les arôme le splus volatils s'échappent et ne peuvent être totalement récupérés,
— lorsqu'on opère à la pression atmosphérique ou à une pression légèrement inférieure on admet que certaines températures ne peuvent être dépassés.

Ainsi, l'invention permet le choix et la mise en ouevre d'un type de solvant spécifique de l'arôme recherché, puisque le point d'ébullition d'un tel solvant peut désormais être choisi aussi proche que possible de la température limite de stabilité de l'extrait aromatique. Lorsque l'on conduit l'étape de distillation à la pression atmosphérique, on peut sélectionner des solvants donnant des mélanges azéotropiques avec l'eau et dont le point d'ébullition sera inférieur de quelques degrés seulement à ladite température. Lorsque cette étape est effectuée sous pression réduite, on peut sélectionner des solvants dont le point d'ébullition sera, pour sa part, supérieur de quelques degrés à ladite température limite de stabilité.

Avec les principaux agrumes, pour lesquels il convient de ne pas dépasser une température de l'ordre de 30 à 40°C, la Demanderesse a ainsi pu obtenir, de façon particulièrement économique, des arôme naturels de très grande qualité, en effectuant l'extraction avec des solvants donnant des mélanges azéotropiques avec l'eau et dont la température d'ébullition, éventuellement sous pression réduite, diffère d'au plus 10°C de la température limite de stabilité des principales essences constitutives de l'arôme, par exemple avec du n-heptane (température d'ébullition de l'azéotrope 78°C). Pour les autres produits végétaux, on choisira également des solvants donnant un mélange azéotropique hétérogène avec l'eau, dont la température d'ébullition est inférieure à la température limite de stabilité de l'arôme à extraire.

Parmi les solvants donnant des mélanges azéotropiques hétérogènes avec l'eau, on peut citer:

a) des éthers, tels que l'éther diéthylique, le dioxane, le trioxane;
b) des esters, tels que l'acétate d'éthyle;
c) des hydrocarbures, comme les butanes, les pentanes, le n-hexane, le cyclohexane, le n-heptane, le n-octane, le méthylcyclohexane, l'éther de pétrole, le benzène et le toluène.

La liste complète des solvants donnant un mélange azéotropique avec l'eau peut être trouvée dans les »Tables azéotropiques« de Maurice Lecat, Edition de 1949.

La matière solide obtenue après déshydratation et filtration de la bouillie contient encore généralement une quantité non négligeable d'arôme. Etant donné qu'elle ne contient plus d'eau on n'est plus limité, pour le choix des solvants d'extraction de l'arôme, à ceux qui donnent un mélange azéotropique hétérogène avec l'eau. On pourra donc utiliser selon le cas, en plus des solvants de la liste sus-mentionnée des solvants connus pour former avec l'eau des mélanges azéotropiques homogènes, par exemple:

a) des alcools, tels que l'éthanol, l'isopropanol ou l'isobutanol,
b) des cétones, tels que la méthyl-éthyl cétone, la méthylisopropyl cétone,

la seule condition à imposer étant que le mélange azéotropique formé ait une température d'ébullition inférieure à la température limite de stabilité des arômes.

Ainsi qu'on l'a déjà précisé, la séparation de l'arôme et du solvant peut être effectuée soit en procédant à une distillation de l'extrait, soit à un strippage, soit à la combinaison de ces deux opérations. Ce dernier procédé est utilisé lorsque, dans une étape de distillation, la température d'ébullition de l'extrait risque de dépasser celle du solvant.

Ce procédé se caractérise en ce qu'il consiste à effectuer une séparation partielle par distillation du solvant contenu dans l'extrait provenant de l'étape d'extraction, à interrompre cette distillation lorsque la concentration de l'arôme dans ledit extrait devient telle que la température d'ébullition de la solution risque de dépasser celle du solvant, et à soumettre ensuite la solution résiduelle à un strippage par un gaz inerte, en vue d'éliminer le reste du solvant et de récupérer l'arôme naturel à l'état sensiblement pur.

Les extraits obtenus par le procédé d'extraction des arômes naturels d'un végétal à l'aide d'un solvant, contiennent généralement une proportion d'au moins 90% en poids de solvant. Grâce à ce procédé de distillation-strippage:

— la distillation de la majeure partie du solvant s'effectue sans élévation de température et, par conséquent, sans risque de détérioration thermique des principes actifs de l'extrait aromatique;
— dès que la proportion des arômes dans le résidu de distillation devient suffisamment importante pour influencer la température, par exemple lorsque la concentration de l'arôme dans le solvant devient supérieure à 25% en poids, le strippage de ce résidu de distillation avec un gaz inerte, tel que l'azote, l'argon ou le gaz carbonique, éventuellement sous pression inférieure à la pression atmosphérique, permet d'éliminer le solvant résiduel, sans augmentation de la température; il permet également d'obtenir des produits très purs répondant aux normes alimentaires, car les teneurs en solvant résiduel sont alors pratiquement nulles;
— le coût de ces deux étapes de distillation et de purification est inférieur au coût d'un strippage au gaz inerte seul, puisque cette dernière opération est limitée au strict nécessaire.

La présente invention permet donc, grâce au choix du solvant spécifique le plus approprié, d'obtenir un extrait aromatique dont la pureté et les propriétés organoleptiques sont tout à fait remarquables, tout en assurant un rendement en extrait aromatique excellent par rapport aux autres méthodes d'extraction d'arômes d'origine végétale.

L'invention concerne également une installation pour l'extraction d'arômes naturels de produits végétaux, par le procédé qui vient d'être exposé.

L'installation d'extraction d'arômes naturels selon l'invention se caractérise en ce qu'elle comporte un broyeur pour réduire les produits végétaux en une fine bouillie, un réacteur dans lequel la bouillie est intimement mélangée avec un solvant dans des proportions choises pour que celui-ci forme avec l'eau contenue dans la bouillie un mélange azéotropique, des moyens de chauffage destinés à porter la température dudit mélange azéotropique à son point d'ébullition, un condenseur dans lequel le distillat du mélange azéotropique se décante et se sépare en eau et en solvant, une ligne de recyclage du solvant vers le réacteur, des moyens de surveillance de la température destinés à détécter le moment où l'eau de la bouillie a été entièrement éliminée du réacteur, un presse-filtre dans lequel la bouillie débarrassée de son eau est séparée en matière solide et en solvant contenant l'arôme, et des moyens appropriés pour la séparation de l'arôme et du solvant.

L'invention sera à présent décrite en détail, en regard des dessins annexés, dans lesquels:

La figure 1 est une vue schématique d'une installation d'extraction d'arômes dans laquelle seul l'extrait recueilli à la sortie du réacteur subit une opération de séparation;

La figure 2 est une variante de réalisation dans laquelle la séparation des arômes contenus d'une part dans l'extrait et d'autre part dans la matière solide est effectuée dans deux unités de séparation distinctes; et

La figure 3 est une variante de réalisation de l'installation de la figure 1 dans laquelle l'extrait subit une opération de distillation suivie d'une opération de strippage.

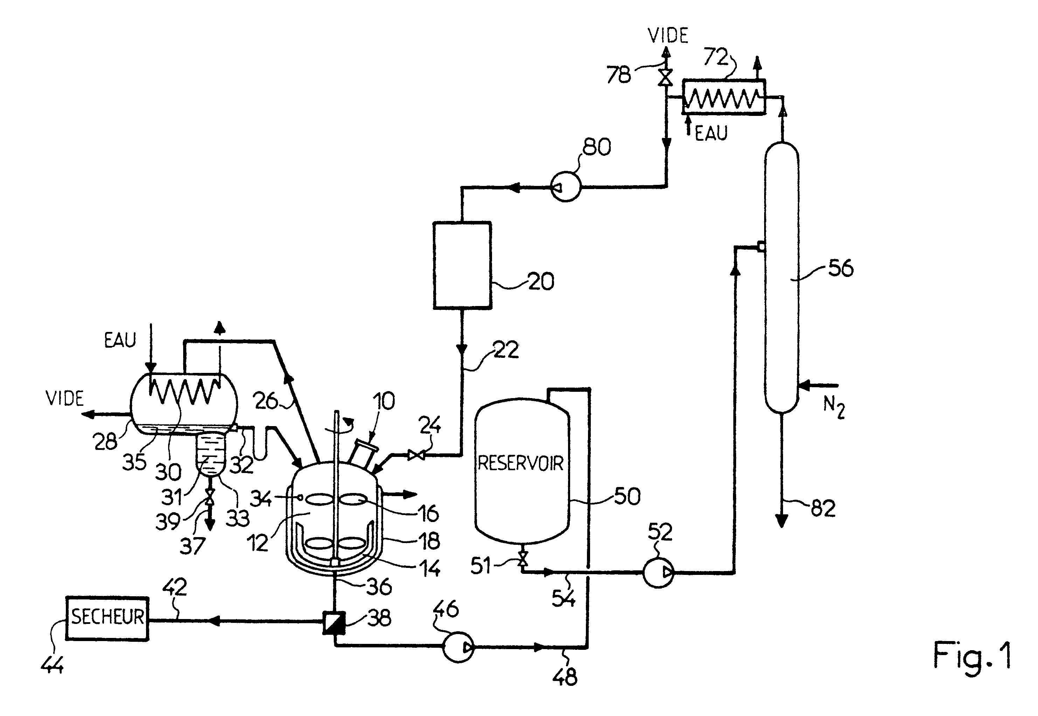

L'installation d'extraction d'arôme illustrée sur la figure 1 comprend un broyeur, non représenté, dans lequel les produits végétaux dont on veut extraire les arômes sont finement broyés en une fine bouillie, laquelle est ensuite déversée à travers un orifice 10, dans un réacteur 12 muni d'un racleur 14, d'un agitateur 16 entraîné par moteur et de moyens de chauffage 18 constitués par exemple par un radiateur électrique à huile enveloppant le réacteur. Le réacteur 12 est également alimenté en solvant à partir d'un réservoir 20 par l'intermédiaire d'une conduite 22 munie d'une vanne 24. La nature du solvant, les proportions de solvant et de produits végétaux, intervenant dans le mélange ainsi que la température et la pression de la réaction, sont convenablement choisies pour que le solvant forme avec l'eau contenue dans la bouillie, un mélange azéottropique hétérogène ayant un point d'ébullition inférieur à la température limite de stabilité de l'arôme.

La vapeur du mélange azéotropique est amenée, par l'intermédiaire d'un conduit 26, à un condenseur 28. Cette vapeur est refroidie par contact avec un échangeur thermique 30 et se condense de ce fait en se séparant en eau 31 laquelle, en raison de sa densité, descend dans un pot 33 fixé à la partie inférieure du condenseur, et en sovant 35 contenant l'arôme, qui surnage au-dessus de l'eau dans le cas où ce solvant est moins dense que l'eau.

L'eau ainsi recueille est éliminée par une conduite 37 équipée d'une vanne 39. Quant au solvant 35, il est recyclé vers le réacteur 12 par l'intermédiaire du conduit 32. Ainsi, la bouillie est débarrassée progressivement de son eau. Pendant toute cette opération de déshydratation, la température dans le réacteur, détectée par le thermocouple 34, reste constante et égale au point d'ébullition du mélange azéotropique. Dès que toute l'eau de la bouille a été éliminée, la température augmente brusquement.

La bouillie restant après la déshydratation est évacuée vers un presse-filtre 38 apr un conduit 36 débouchant dans le fond du réacteur. Le presse-filtre sépare la matière solide, qui est acheminée par un conduit 42 vers un sécheur 44, de l'extrait contenant l'arôme qui est acheminé par une pompe 46, à l'aide d'un conduit 48 jusqu'à un réservoir de stockage 50.

Un débit réglable de cet extrait peut être soutiré du réservoir, en ouvrant une vanne 51 montée sur une tubulure de sortie 54 se raccordant au fond du réservoir. Ce débit d'extrait est mis en circulation par une pompe 52 qui l'amène à une unité de séparation 56.

Cette unité de séparation peut être constituée par une colonne de distillation ou encore par une colonne de strippage ou encore par l'ensemble des deux.

Sur la figure 1, on a supposé que la colonne 56 est une colonne de strippage. Un gaz inerte, tel que l'azote, éventuellement à une pression inférieure à la pression atmosphérique, est soufflé à contre-courant dans le bas de la colonne 56, et entraîne ainsi le solvant sous forme de vapeur vers un condenseur réfrigéré 72. Le solvant se sépare du gaz inerte et est ramené par une pompe 80 vers le réservoir 20 tandis que le gaz inerte est aspiré par une source de vide 78. Quant à l'arôme, il est recueilli à la sortie 82 de la colonne.

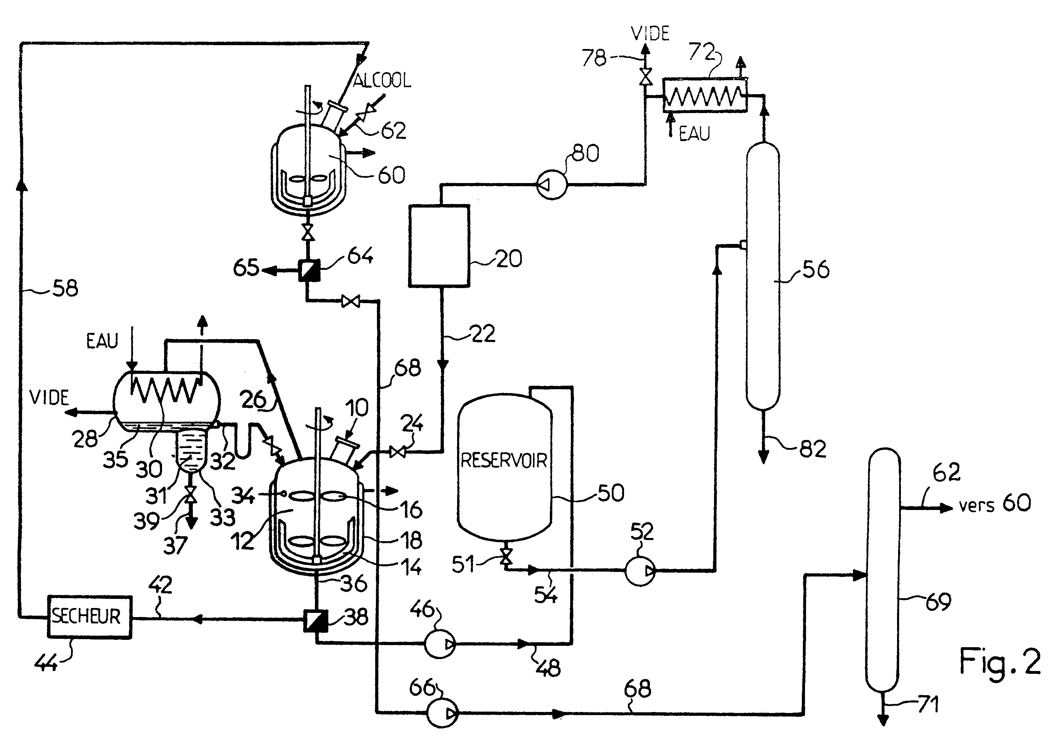

Dans la variante de réalisation de la figure 2, la matière solide sortant du sécheur 44 est amenée par un conduit 58 à un deuxième récateur 60 de même structure, mais plus petit que le réacteur 12. Le solvant utilisé dans ce réacteur peut être constitué, à titre non limitatif, par un alcool (conduit 62). La bouillie ainsi abtenue est chauffée et après un temps de contact suffisant, elle est à nouveau pressée dans un second presse-filtre 64, ce qui donne une matière désaromatisée qui peut donc être éliminée (sortie 65), et un extrait contenant une certaine quantité valorisable d'arôme. Cet extrait est acheminé par une pompe 66 et au moyen d'un conduit 68 à une unité de séparation 69, qui peut être une colonne de distillation ou une colonne de strippage ou l'ensemble des deux. L'arôme est recueilli à la sortie 71 de la colonne, tandis que l'alcool est recyclé dans le réacteur 60 (ligne 62).

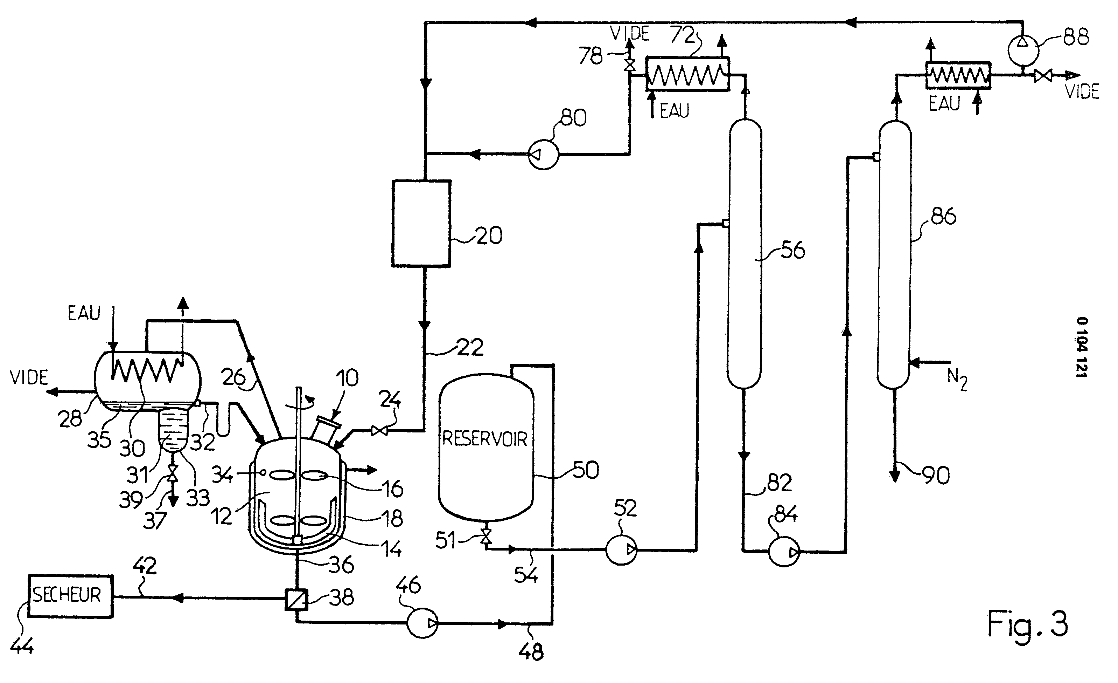

La figure 3 illustre un procédé de séparation de l'arôme de son solvant dans une colonne de distillation 56, puis dans une colonne de strippage 86. Comme on l'a expliqué précédemment, certaines températures de distillation ne pouvant pas être dépassées sans que les arômes se volatilisent ou se

4

dégradent, on élimine le solvant contenu dans l'extrait en combinant la technique de la distillation qui est conduite dans une première colonne de séparation et la technique du strippage qui est effectuée dans une deuxième colonne.

Après une séparation partielle par distillation du solvant contenu dans la solution provenant de l'étape d'extraction, on interrompt cette distillation lorsque la concentration de l'arôme dans ladite solution devient telle que la température d'ébullition de la solution risque de dépasser celle du solvant, et on envoie ensuite la solution résiduelle dans une colonne de strippage par un gaz inerte, en vue d'éliminer le reste du solvant et de récupérer l'arôme naturel à l'état sensiblement pur, sans apport supplémentaire de calories.

Ainsi, selon la figure 3 qui est une variante de l'installation de la figure 1, le résidu de destillation concentré en arôme qui est recueilli à la sortie 82 de la colonne de séparatioon 56 amené par une pompe 84 à une colonne de strippage 86 dans laquelle l'arôme est débarrassé du solvant résiduel. Celui-ci est recyclé par une pompe 88 vers le réservoir 20, et à la sortie 90 de la colonne 86, on recueille un arôme pratiquement pur et d'exellente qualité.

Les exemples qui vont suivre visent à illustrer plus précisément les divers aspects de l'invention, qu'ils n'entendent en aucune façon limiter.

## Exemple I

On broie finement 3 837 grammes d'asperges de bonne qualité, et on les verse dans un réacteur ayant une contenance de 25 litres. La bouillie d'asperge contenant notamment l'arôme et les pectines est mélangée avec le même poids d'heptane, sous pression atmosphérique. L'heptane forme alors avec l'eau de la bouillie un mélange azéotropique dont le point d'ébullition, compte tenu des proportions du mélange et de la pression dans le réacteur, est de 78°C. On fait évaporer la bouillie en portant la température dans le réacteur à 78°C et la distillation du mélange azéotropique est terminée lorsque la température dans le réacteur monte et atteint 98°C, température d'ébullition de l'heptane.

La décantation du distillat dans un séparateur maintenu à la température ambiante permet d'éliminer 3 383 grammes d'eau, soit 88,17% en poids des asperges et de recueillir un extrait contenant les arômes.

Pour ne pas détériorer les qualités de l'arôme d'asperge par élévation de la température de l'extrait, on transvase celui-ci dans une colonne de strippage et l'on y fait barboter 200 Normolitres par heure d'azote à température ambiante pendant 30 minutes. L'heptane ainsi évaporé est recueilli dans un condenseur réfrigéré à l'aide de carboglace; il ne présente pas non plus d'odeur d'arômes. On recueille 7,6 grammes d'arôme soit 0,2% du poids initial des asperges.

Les matières solides recueillies sur filtre-presse à la sortie du réacteur sont transférées, après séchage à l'air chaud, dans un second réacteur d'une contenance de 1 litre où elles sont mélangées à 1800 grammes d'éthanol à 96°. Le mélange est agité pendant 1 heure à 78°C sous reflux d'alcool puis filtré. On obtient ainsi 226,2 grammes de matières sèches, soit 5,90% en poids et 1888,5 grammes d'extrait alcoolique. Cet extrait alcoolique est distillé et débarrassé de son solvant dans une colonne de strippage, ce qui permet de recueillir 57,8 grammes d'oléorésine.

En résumé, on obtient 7,6 grammes d'arôme et 57,8 grammes d'oléorésines de goût excellent.

## Exemple II

On broie 5036,4 grammes de fraises lavées, on les transvase dans un réacteur de 25 litres et on les mélanges avec le même poids d'heptane. On procède ensuite à une déshydratation azéotropique dans les mêmes conditions que dans l'exemple précédent. Un poids de 4367 grammes d'eau, soit 86,71% en poids, est éliminé par décantation à froid du distillat. On poursuit ensuite la distillation jusqu'à élimination totale de l'heptane. Les matières solides restantes sont transférées, après séchage à l'air chaud, dans un réacteur de 1 litre dans lequel on verse 1800 grammes d'éthanol à 96°. L'arôme est extrait de la façon connue sous reflux d'alcol à une température de 78°C et sous pression atmosphérique. Après séchage à l'air chaud, il reste dans le réacteur 251,1 grammes de matières sèches, soit 4,99% en poids, tandis que l'on recueille 1717 grammes d'extrait liquide. Cet extrait est soumis à une opération de distillationstrippage, ce qui permet de recueillir 271,55 grammes d'oléorésine, soit un rendement de 5,39% en poids des fraises utilisées. L'oléorésine obtenue a un excellent goût de fraise.

## Exemple III

On prépare et on broie dans les mêmes conditions que dans l'exemple précédent 300 grammes d'oignons, dont on extrait les arômes avec 600 grammes d'éther de pétrole dans un réacteur de 1 litre. L'entraînement azéotropique de l'eau s'effectue à pression atmosphérique et à 45°C, ce qui permet d'éliminer 249,9 grammes d'eau, soit 83,3% du poids initial des oignons. Après filtration, on recueille 430 grammes d'extrait que l'on soumet à une distillation et à un strippage par l'azote. On recueille ainsi 0,52 gramme d'arôme, soit 0,166% en poids des oignons. Cet arôme a de très bonnes qualités organoleptiques. Après séchage à l'air de la partie solide, il reste dans le réacteur 44,6 grammes de matière sèche, soit 14,87% en poids des oignons.

## Exemple IV

On utilise cette fois-ci 4 kg d'oignons que l'on broie et mélange à 8 kg d'heptane dans un réacteur de 25 litres. On effectue une déshydratation azéotropique de la bouillie à une pression de 140 mm de mercure pendant 11 heures. Pendant cette opération, le point d'ébullition reste constant à 40°C et, lorsque la déshydratation prend fin, le point d'ébullition monte à 55°C.

Après décantation, on recueille 3560 grammes d'eau, soit 89% du poids des oignons engagé. Un poids de 7691 grammes d'etrait est séparé par filtration de la matière solide qui, après séchage à l'air, représente 398 grammes, soit 9,95%. L'extrait aromatique subit une distillation puis un strippage ce qui permet d'isoler 7,1 grammes d'arôme d'oignion, soit un rendement de 0,177% en poids.

Les 398 grammes de matière sèche sont extraits dans un réacteur de 1 litre sous reflux d'alcool à 96° pendant environ une demi-heure. L'extrait alcoolique recueilli par filtration subit une distillation, ce qui permet d'isoler 61,7 grammes d'arôme d'oignon, soit un rendement de 1,54% du poids des oignons engagé.

En résumé, pour 100 g d'oignons mis en oeuvre, on obtient:

| | |
|---|---|
| 0,177 gramme | d'arôme par l'extraction à l'heptane |
| 1,54 gramme | d'arôme par l'extraction à l'alcool |
| 9,95 grammes | de matière sèche |
| 89 grammes. | d'eau |

## Exemple V

Comme dans l'exemple IV, 4 kg d'oignons sont extraits par 8 kg d'heptane, mais cette fois-ci la déshydratation azéotropique est effectuée à la pression atmosphérique. Après les mêmes opérations, et pour résumer, 100 g d'oignons mis en oeuvre fournissent:

| | |
|---|---|
| 0,225 gramme | d'arômes par l'extraction à l'heptane |
| 2,25 grammes | d'arômes par l'extraction à l'alcool |
| 11,28 grammes | de matière sèche |
| 86,25 grammes | d'eau |

Les arômes ainsi obtenus ont un excellent goût d'oignon.

## Exemple VI

Dans cet exemple, on prépare une poudre aromatique à partir de 300 grammes d'oignons que l'on broie et mélange à 300 grammes d'heptane dans un réacteur de 1 Litre. Après trois heures de contact, on effectue la déshydratation azéotropique du mélange à 78°C sous pression atmosphérique. On recueille ainsi 265,2 grammes d'eau, soit 88,4%. Après évaporation totale du solvant, il reste 33 grammes de matière sèche aromatisée, correspondant à un rendement de 11% en poids par rapport à celui des oignons broyés. La poudre obtenue a un excellent goût d'oignon.

## Exemple VII

Comme dans l'exemple IV on effectue dans un réacteur de 25 litres à une pression de 140 mm de mercure et à 40°C, la déshydratation azéotropique de 4721 grammes de citrons broyés, par 5000 grammes d'heptane.

Après décantation, on recueille 3796 grammes d'eau, soit 80,40% du poids des citrons mis en oeuvre. Par filtration, on sépare des matières solides, 4510 grammes d'extrait aromatique qui subissent une distillation sous vide, puis un strippage à l'azote. Cette opération permet d'isoler 23,2 grammes d'arôme, soit un rendement de 0,49% en poids.

Après séchage à l'air, les matières solides sont extraites sous reflux d'éthanol à 96°C pendant 1 heure dans un réacteur de 1 litre. L'extrait alcoolique recueilli est distillé sous vide et strippé ce qui permet d'isoler 230,5 grammes d'arômes, soit un rendement de 4,88% en poids des citrons engagés.

En résumé, pour 100 grammes de citrons mis en oeuvre, on obtient:

| | |
|---|---|
| 0,49 gramme | d'arômes par l'extraction à l'heptane |
| 4,88 grammes | d'arômes par l'extraction à l'alcool |
| 14,23 grammes | de matières sèches désaromatisées |
| 80,40 grammes | d'eau |

## Revendications

1. Procédé d'extraction d'arômes naturels de produits végétaux consitant à réduire les produits végétaux en une fine bouillie contenant l'arôme et les pectines,

— à ajouter à ladite bouillie un solvant qui forme à chaud, avec l'eau des produits végétaux, un mélange azéotropique hétérogène, ayant un point d'ébullition inférieur à la temperature limite de stabilité des principales essences constitutives de l'arôme,
— à chauffer la bouillie dans un réacteur à la température d'ébullition du mélange azéotropique,
— à condenser les vapeurs dans un récipient séparé,
— à décanter le condensat obtenu de manière à séparer l'eau et le solvant;
— à recycler ledit solvant dans le réacteur,
— à arrêter la distillation au moment où la température dans le réacteur monte brusquement et devient nettement supérieure à la température d'ébullition du mélange azéotropique,
— à filtrer l'extrait afin de séparer la matière solide du solvant contenant l'arôme, et
— à isoler l'arôme du solvant par tout procédé approprié.

2. Procédé d'extraction d'arômes naturels de produits végétaux selon la revendication 1, caractérisé en ce que l'on arrête la phase d'évaporation du mélange azéotropique au moment où la température dans le réacteur devient nettement supérieure au point d'ébullition dudit mélange.

3. Procédé d'extraction d'arômes naturels de produits végétaux particulièrement sensibles selon l'une des revendications 1 et 2, caractérisé en ce que l'extraction azéotropique est effectuée à une température inférieure d'au moins 10°C à la température limite de stabilité des principales essences constitutives de l'arôme.

4. Procédé d'extraction d'arômes naturels de produits végétaux selon l'une des revendications 1 à 3, caractérisé en ce que comme solvant d'extraction on peut utiliser:

a) des éthers, teils que l'éther diéthylique, le dioxane, le trioxane,
b) des esters, tels que l'acétate d'éthyle,
c) des hydrocarbures, comme les butanes, les pentanes, le n-hexane, le cyclohexane, le n-heptane, le n-octane, le méthyl-cyclohexane, l'éther de pétrole, le benzène et le toluène.

5. Procédé d'extraction d'arômes naturels de produits végétaux selon l'une des revendications 1 à 3, caractérisé en ce que les matières solides sèches issues de la première étape d'extraction par les solvants sus-mentionnés peuvent être utilisées pour une deuxième extraction avec d'autres types de solvants.

6. Procédé d'extraction d'arômes naturels de produits végétaux selon l'une des revendications 4 et 5, caractérisé en ce que pour la deuxième extraction on peut utiliser l'un des solvants sus-mentionnés ou un solvant donnant avec l'eau un mélange azéotropique homogène, par exemple:

a) des alcools, tels que l'éthanol, l'isopropanol ou l'isobutanol,
b) des cétones, tels que la méthyl-éthyl cétone, la méthylisopropyl cétone,

la seule condition à imposer étant que le mélange azéotropique formé ait une température d'ébullition inférieure à la tèmpérature limite de stabilité des arômes.

7. Procédé d'extraction d'arômes naturels de produits végétaux selon la revendication 1, caractérisé en ce que la séparation de l'arôme du solvant s'effectue par une opération de distillation-strippage par un gaz inerte, tel que l'azote, l'argon ou encore le gaz carbonique.

8. Procédé d'extraction d'arômes naturels de produits végétaux particulièrement sensibles ou très volatils, selon l'une des revendications précédentes, caractérisé en ce que la distillation de l'extrait contenant l'arôme est effectuée sous une pression comprise entre 0,2 et 2 bars et à une température inférieure d'au moins 10°C à la température limite de stabilité des principales essences constitutives de l'arôme.

9. Procédé d'extraction d'arômes naturels de produits végétaux selon la revendication 8, caractérisé en ce qu'on procède au strippage lorsqu'au moins 25% du solvant a été évaporé ou quand la température de l'extrait devient supérieure à la température d'ébullition du solvant.

10. Procédé d'extraction d'arômes naturels de produits végétaux selon l'une des revendications 8 et 9, caractérisé en ce qu'on effectue le strippage à une pression inférieure à la pression atmosphérique.

11. Installation d'extraction d'arôme naturels de produits végétaux pour la mise en oeuvre du procédé selon l'une des revendications précédentes, caractérisée en ce qu'elle comporte un broyeur destiné à réduire les produits végétaux en une fine bouillie, un réacteur (12) dans lequel la bouillie est intimement mélangée avec un solvant dans des proportions choisies pour que celui-ci forme avec l'eau contenue dans la bouillie un mélange azéotropique, de moyens de chauffage (18) destinés à porter la température dudit mélange azéotropique à son point d'ébullition, un condenseur (28) dans lequel le distillat du mélange azéotropique décante et se sépare en eau et en solvant, une ligne de recyclage (32) du solvant vers le réacteur, des moyens de surveillance de la température (34) destinés à détecter le moment où l'eau de la bouillie a été entièrement éliminée du réacteur, un presse-filtre (38) dans lequel la bouillie déshydratée est séparée en matière solide et en solvant contenant l'arôme, et des moyens appropriés pour la séparation de l'arôme et du solvant.

12. Installation selon la revendication 11, caractérisée en ce que lesdits moyens sont constitués par une colonne de distillation et/ou par une colonne de strippage.

13. Application du procédé selon l'une des revendications 1 à 10 à l'exctraction des arômes naturels des fruits, agrumes, légumes, graines ou plantes aromatiques.

14. Huiles aromatiques d'origine végétale, notamment de fruits, d'agrumes, de légumes, de graines ou de plantes aromatiques, obtenus par la mise en oeuvre du procédé selon l'une des revendications 1 à 10.


**Patentansprüche**

1. Verfahren zur Extraktion natürlicher Aromas aus pflanzlichen Produkten, wobei die pflanzlichen Produkte zu einem feinen Brei zerkleinert werden, welcher das Aroma und die Pektine enthält, und

— dem Brei ein Lösungsmittel zugesetzt wird, welches in der Wärme mit dem Wasser der pflanzlichen Produkte ein heterogenes, azeotropes Gemisch mit einem Siedepunkt niedriger als die Stabilitätsgrenztemperatur der für das Aroma wesentlichen Hauptessenzen bildet,
— der Brei in einem Reaktor auf die Siedetemperatur des azeotropen Gemischs erhitzt wird,
— die Dämpfe in einem gesonderten Behälter kondensiert werden,
— das erhaltene Kondensat dekantiert wird, um das Wasser und das Lösungsmittel zu trennen,
— das Lösungsmittel in den Reaktor rückgeführt wird,
— die Destillation beendet wird, sobald die Temperatur im Reaktor plötzlich steigt und die Siedetemperatur des azeotropen Gemischs deutlich übersteigt,
— der Extrakt filtriert wird, um den Feststoff von dem das Aroma enthaltenden Lösungsmittel zu trennen, sowie
— das Aroma aus dem Lösungsmittel nach irgendeinem geeigneten Verfahren isoliert wird.

2. Verfahren zur Extraktion natürlicher Aromas aus pflanzlichen Produkten nach Anspruch 1, dadurch gekennzeichnet, daß das Verdampfen des azeotropen Gemischs beendet wird, sobald die Temperatur im Reaktor den Siedepunkt des Gemischs deutlich übersteigt.

3. Verfahren zur Extraktion besonders empfindlicher natürlicher Aromas aus pflanzlichen Produkten nach Anspruch 1 oder 2, dadurch gekennzeichnet, daß die azeotrope Extraktion bei einer Temperatur durchgeführt wird, welche um wenigstens 10" C niedriger als die Stabilitätsgrenztemperatur der für das Aroma wesentlichen Hauptessenzen ist.

4. Verfahren zur Extraktion natürlicher Aromas aus pflanzlichen Produkten nach Anspruch 1, 2 oder 3, dadurch gekennzeichnet, daß als Extraktionslösungsmittel

a)  Äther, wie Diäthyläther, Dioxan, Trioxan,
b)  Ester, wie Äthylacetat,
c)  Kohlenwasserstoffe, wie die Butane, die Pentane, n-Hexan, Cyclohexan, n-Heptan, n-Octan, Methylcyclohexan, Petroläther, Benzol und Toluol,

verwendet werden können.

5. Verfahren zur Extraktion natürlicher Aromas aus pflanzlichen Produkten nach Anspruch 1, 2 oder 3, dadurch gekennzeichnet, daß die aus dem ersten Extraktionsschritt mit den erwähnten Lösungsmitteln stammenden, trockenen Feststoffe für eine zweite Extraktion mit andersartigen Lösungsmitteln verwendet werden können.

6. Verfahren zur Extraktion natürlicher Aromas aus pflanzlichen Produkten nach Anspruch 4 oder 5, dadurch gekennzeichnet, daß für die zweite Extraktion eines der erwähnten Lösungsmittel oder ein Lösungsmittel verwendet werden kann, welches mit dem Wasser ein homogenes azeotropes Gemisch ergibt, beispielsweise:

a)  Alkohole, wie Äthanol, Isopropanol oder Isobutanol,
b)  Ketone, wie Methyläthylketon, Methylisopropylketon,

8

wobei allein maßgebend ist, daß das gebildete azotrope Gemisch eine Siedetemperatur niedriger als die Stabilitätsgrenztemperatur der Aromas aufweist.

7. Verfahren zur Extraktion natürlicher Aromas aus pflanzlichen Produkten nach Anspruch 1, dadurch gekennzeichnet, daß die Trennung des Aromas vom Lösungsmittel mittel eines Destillation-Stripping-Vorganges unter Verwendung eines Inertgases, wie Stickstoff, Argon oder ferner Kohlendioxid, erfolgt.

8. Verfahren zur Extraktion besonders empfindlicher oder sehr flüchtiger natürlicher Aromas aus pflanzlichen Produkten nach einem der vorstehenden Ansprüche, dadurch gekennzeichnet, daß die Destillation das des Aroma enthaltenden Extraktes unter einem Druck zwischen 0,2 und 2 bar sowie bei einer Temperatur durchgeführt wird, welche um wenigstens 10° C niedriger als die Stabilitätsgrenztemperatur der für das Aroma wesentlichen Hauptessenzen ist.

9. Verfahren zur Extraktion natürlicher Aromas aus pflanzlichen Produkten nach Anspruch 8, dadurch gekennzeichnet, daß das Stripping erfolgt, sobald mindestens 25% des Lösungsmittels verdampft worden sind oder die Temperatur des Extraktes die Siedetemperatur des Lösungsmittels übersteigt.

10. Verfahren zur Extraktion natürlicher Aromas aus pflanzlichen Produkten nach Anspruch 8 oder 9, dadurch gekennzeichnet, daß das Stripping bei einem Druck niedriger als der Atmosphärendruck durchgeführt wird.

11. Anlage zur Extraktion natürlicher Aromas aus pflanzlichen Produkten für die Durchführung des Verfahrens nach einem der vorstehenden Ansprüche, gekennzeichnet durch eine Zerkleinerungsvorrichtung zur Zerkleinerung der pflanzlichen Produkte zu einem feinen Brei, einen Reaktor (12) zur innigen Vermischung des Breis mit einem Lösungsmittel in einem solchen Verhältnis, daß das Lösungsmittel mit dem im Brei enthaltenen Wasser ein azeotropes Gemisch bildet, Heizmittel (18) zur Erwärmung des azeotropen Gemischs auf seinen Siedepunkt, einen Kondensator (28), in welchem das Destillat des azeotropen Gemischs dekantiert und sich in Wasser und Lösungsmittel trennt, eine Rückführleitung (32) für das Lösungsmittel zum Reaktor, Temperaturüberwachungsmittel (34) zur Feststellung des Augenblicks der vollständigen Entfernung des Wassers des Breis aus dem Reaktor, eine Filterpresse (38) zur Trennung des entwässerten Breis in Feststoff und Lösungsmittel, welches das Aroma enthält, und geeignete Mittel zur Trennung des Aromas und des Lösungsmittels.

12. Anlage nach Anspruch 11, dadurch gekennzeichnet, daß die besagten Mittel aus einer Destillationskolonne und/oder einer Strippingkolonne bestehen.

13. Anwendung des Verfahrens nach einem der Ansprüche 1 bis 10 zur Extraktion der natürlichen Aromas aus Früchten, Zitrusfrüchten, Gemüsen, Körnern oder aromatischen Pflanzen.

14. Aromatische Öle pflanzlichen Ursprungs, insbesondere von Früchten, Zitrusfrüchten, Gemüsen, Körnern oder aromatischen Pflanzen, gewonnen nach dem Verfahren gemäß einem der Ansprüche 1 bis 10.


**Claims**

1. A process for extracting natural aromas from vegetable products consisting in reducing the vegetable products to a fine pulp containing the aroma and the pectins,

 — in adding to said pulp a solvent which forms, when hot, with the water from the vegetable products a heterogeneous azeotropic mixture having a boiling point less than the maximum temperature of stability of the principle essences forming the aroma
 — in heating the pulp in a reactor at the boiling temperature of the azeotropic mixture,
 — in condensing the vapors in a separate receptacle,
 — in decanting the condensate obtained so as to separate the water and the solvent,
 — in recycling said solvent to the reactor.
 — in stopping the distillation at the moment when the temperature in the reactor rises sharply and becomes appreciably greater than the boiling temperature of the azeotropic mixture,
 — in filtering the extracts so as to separate the solid material from the solvent containing the aroma, and
 — in isolating the aroma from the solvent by any appropriate process.

2. Process for extracting natural aromas from vegetable products according to claim 1, characterized in that the evaporation phase of the azeotrophic mixture is stopped at the moment when the temperature in the reactor becomes appreciably greater than the boiling point of said mixture.

3. Process for extracting natural aromas from particularly sensitive vegetable products according to one of claims 1 and 2, characterized in that the azeotropic extraction is carried out at a temperature less, by at least 10° C, than the maximum temperature of stability of the principle essences forming the aroma.

4. Process for extracting natural aromas from vegetable products according to one of claims 1 to 3, characterized in that, as extraction solvent, the following may be used:

a) ethers, such as diethyl ether, dioxane, trioxane,
b) esters, such as ethyl acetate,
c) hydrocarbons, such as butanes, pentanes, n-hexane, cyclohexane, n-heptane, n-octane, methylcyclohexane, petroleum ether, benzene and toluene.

5. Process for extracting natural aromas from vegetable products according to one of claims 1 to 3, characterized in that the dry solid materials from the first extraction step using the above mentioned solvents may be used for a second extraction with other types of solvents.

6. Process for extracting natural aromas from vegetable products according to one of claims 4 and 5, characterized in that for the second extraction one of the above mentioned solvents is used or a solvent giving with water a homogeneous azeotrophic mixture: for example:

a) alcohols, such as ehtanol, isopropanol or isobutanol,
b) ketones, such as methyl-ethyl ketone, methylisopropyl ketone,

the only condition to be respected being that the azeotrophic mixture formed should have a boiling temperature less than the maximum temperature of stability of the aromas.

7. Process for extracting natural aromas from vegetable products according to claim 1, characterized in that the separation of the aroma from the solvent is effected by a distillation-stripping operation using an inert gas, such as nitrogen, argon or else carbonic gas.

8. Process for extracting natural aromas from particularly sensitive or very volatile vegetable products, according to one of the preceding claims, characterized in that the distillation of the extract containing the aroma is carried out at a pressure between 0.2 and 2 bars and at a temperature less by at least 10°C than the maximum temperature of stability of the principle essences forming the aroma.

9. Process for extracting natural aromas from vegetable products according to claim 8, characterized in that stripping is carried out when at least 25% of the solvent has been evaporated or when the temperature of the extract becomes greater than the boiling temperature of the solvent.

10. Process for extracting natural aromas from vegetable products according to one of claims 8 and 9, characterized in that stripping is carried out at a pressure less than the atmospheric pressure.

11. Installation for extracting natural aromas from vegetable products for implementing the process according to one of the preceding claims, characterized in that it comprises a crusher for reducing the vegetable products to a fine pulp, a reactor (12) in which the pulp is intemately mixed with a solvent in proportions selected so that this latter forms with the water contained in the pulp an azeotrophic mixture, heating means (18) for bringing the temperature of said azeotrophic mixture to its boiling point, a condenser (28) in which the distillate of the azeotrophic mixture decants and separates into water and solvent, a line (32) for recycling the solvent to the reactor, temperature monitoring means (34) for detecting the moment when the water of the pulp has been completely eliminated from the reactor, a filter press (38) in which the dehydrated pulp is separated into solid material and solvent containing the aroma, and appropriate means for separating the aroma and the solvent.

12. Installation according to claim 11, characterized in that said means are formed by a distillation column and/or a striping column.

13. Application of the process according to one of claims 1 to 10 to the extraction of natural aromas from fruits, citrus fruits, vegetables, seeds or aromatic plants.

14. Aromatic oils of plant origin, partricularly from fruits, citrus fruits, vegetables, seeds or aromatic plants, obtained by using process according to one of claims 1 to 10.

Fig.1

Fig. 2

Fig. 3

0 104 121